# EUROPEAN PATENT APPLICATION

(11) **EP 3 832 486 A2**
(43) Date of publication of application: **09.06.2021**
(21) Application number: 21164204.6
(22) Date of filing: 23.03.2021
(51) Int. Cl.: G06F 16/332, G06F 16/33

(54) **TEXT QUERY METHOD AND APPARATUS, DEVICE AND STORAGE MEDIUM**

(30) Priority: 27.04.2020 CN 202010343782
(71) Applicant: BEIJING BAIDU NETCOM SCIENCE AND TECHNOLOGY CO. LTD., 100085 Beijing (CN)
(72) Inventor: LIU, Chang, Beijing, 100085 (CN); YANG, Shuangquan, Beijing, 100085 (CN); ZHANG, Yang, Beijing, 100085 (CN); XIE, Yi, Beijing, 100085 (CN)
(74) Representative: Studio Torta S.p.A.

(57) **Abstract**

The present application discloses a text query method and apparatus, device and storage medium, and relates to the field of intelligent search technology. A specific implementation scheme includes: identifying intention information and feature information of a query text, where the intention information is used to indicate intention of the query text; according to the intention information, determining a query interface for querying the intention; and querying a query result matching the feature information in information corresponding to the intention through the query interface. The present application can improve query efficiency of text query.

## Description

### TECHNICAL FIELD

The present application relates to the field of intelligent search technology in the field of computer technology, and in particular to a text query method and apparatus, device and storage medium.

### BACKGROUND

At present, a text query method is mainly a user's manual query. Specifically, the user performs a series of operations such as clicking, dragging and inputting text in components such as a webpage and an input box, and then can find a corresponding query function and perform a corresponding query. Thus, a query efficiency of the current text query is low.

### SUMMARY

The present application provides a text query method and apparatus, device and storage medium, to solve the problem that the query efficiency of the text query is low.

In a first aspect, the present application provides a text query method, including:
identifying intention information and feature information of a query text, wherein the intention information is used to indicate intention of the query text;
according to the intention information, determining a query interface for querying the intention; and
querying a query result matching the feature information in information corresponding to the intention through the query interface.

In a second aspect, the present application provides a text query apparatus, including:
an identification module configured to identify intention information and feature information of a query text, wherein the intention information is used to indicate intention of the query text;
a determining module configured to determine a query interface for querying the intention according to the intention information; and
a query module configured to query a query result matching the feature information in information corresponding to the intention through the query interface.

In a third aspect, the present application provides an electronic device, including:
at least one processor; and
a memory communicatively connected to the at least one processor; wherein,
the memory stores instructions executable by the at least one processor to enable the at least one processor to implement the text query method provided in the present application.

In a fourth aspect, the present application provides a non-transitory computer-readable storage medium storing computer instructions for causing the computer to perform the text query method provided in the present application.

The technical solution of the present application can improve query efficiency of text query.

It is to be understood that the contents in this section are not intended to identify the key or critical features of the embodiments of the present application, and are not intended to limit the scope of the present application. Other features of the present application will become readily apparent from the following description.

### BRIEF DESCRIPTION OF THE DRAWINGS

The drawings are included to provide a better understanding of the application and are not to be construed as limiting the application. Wherein:
FIG. 1 is a flowchart of a text query method provided in the present application;
FIG. 2 is a schematic diagram of a language model provided in the present application;
FIG. 3 is a schematic diagram of analyzing time information provided in the present application;
FIG. 4 is a structural diagram of a text query apparatus provided in the present application;
FIG. 5 is a block diagram of an electronic device for implementing a text query method according to an embodiment of the present application.

### DETAILED DESCRIPTION

Reference will now be made in detail to the exemplary embodiments of the present application, examples of which are illustrated in the accompanying drawings, wherein the various details of the embodiments of the present application are included to facilitate understanding and are to be considered as exemplary only. Accordingly, a person skilled in the art should appreciate that various changes and modifications can be made to the embodiments described herein without departing from the scope and spirit of the present application. Also, descriptions of well-known functions and structures are omitted from the following description for clarity and conciseness.

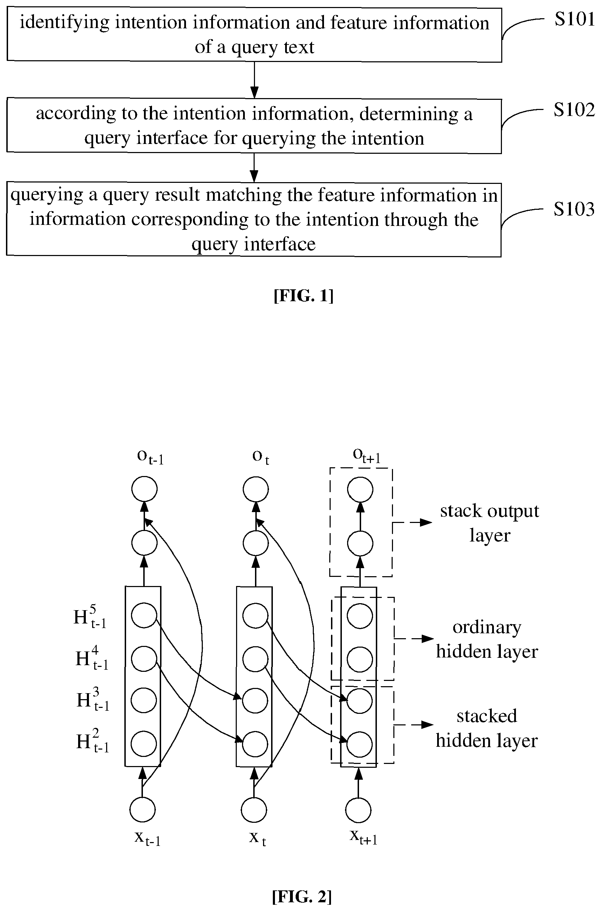

Referring to FIG. 1, FIG. 1 is a flowchart of a text query method provided in the present application. As shown in FIG. 1, the method includes the following steps S101-S103.

Step S101: identifying intention information and feature information of a query text, where the intention information is used to indicate intention of the query text.

The foregoing intention may represent a query intention of the foregoing query text. The foregoing intention information may be intention information extracted from the query text. For example, for a query text of "Li Si's travel record last week", the intention information may include travel, people, records and other intention information. For another example, for a query text of "what about accommodation conditions last week?", the intention information may include accommodation and other intention information. Further, the foregoing intention information may also include intention information analyzed from the query text. For example, for the query text of "what about accommodation conditions last week?", it may be identified that the intention information of the query text may include hotels.

The foregoing feature information may include information such as time and entity of the query text.

In addition, the foregoing query text may be a free-text query sentence, a natural-text query sentence or a regular query sentence.

Further, the foregoing query text may be text obtained by converting input voice, or input text.

Step S102: according to the intention information, determining a query interface for querying the intention.

In the present application, multiple query interfaces may be configured in advance, and different query interfaces are used for querying query results of different intentions.

The query interface of the present application may be an application programming interface (API).

Step S103: querying a query result matching the feature information in information corresponding to the intention through the query interface.

The foregoing information corresponding to the intention may be information associated with the intention. For example, taking a travel intention as an example, the information corresponding to the intention may include travel-related information, such as route, weather, flight and other information.

The foregoing query result matching the feature information may be information obtained from the information corresponding to the intention according to the feature information, such as text, picture, video or a combination of these information. Further, the foregoing feature information may also be understood as a query parameter of the foregoing interface.

In the present application, through the above steps, the query result matching the feature information can be directly searched through a query result corresponding to the intention, thereby improving an efficiency of text query.

For example, for the following query texts:
Who's been traveling with Zhang San recently?
Li Si's travel record last week?
Who is Xiao Zhang's father?

The query results may include: specific record information, basic information of related people, full-text search information of related articles, relationship graphs, behavior trajectories, etc.

Further, the present application may also sort the query results according to scores of similarity with the query text.

It should be noted that the text query method provided in the present application may be applied to an electronic device, such as a server, a computer, a mobile phone and other electronic device.

As an optional embodiment, the foregoing feature information includes at least one of the following:
entity information and time information.

The foregoing entity information may indicate entities in the foregoing query text, and these entities may be people, events, places, objects, cases and other entity categories.

The foregoing time information may indicate time corresponding to the foregoing query text, such as a time point or a time period.

In this embodiment, a query result that matches at least one of the entity information and the time information, can be queried in the information corresponding to the foregoing intention, thereby improving an accuracy of the query result.

Optionally, the entity information is entity information of the query text identified through a language model.

The foregoing language model may be a deep learning neural network model or a recurrent neural network model. For example, a network model is shown in FIG. 2. Of course, FIG. 2 is only an example, and the language model is not limited in the present application.

In addition, the foregoing language model may be a language model established by deep learning or conditional random field (crf).

Taking a language model established by deep learning as an example, each character or word of a sentence may be labeled correspondingly in a training process in which a sequence to sequence model may be used.

Taking a long short-term memory (LSTM) language model as an example, a supervised corpus can be trained.

For example, for "Li Si's travel record last week", last week->"time"; Li Si->"person's name"; travel->"behavior type"; record->"default".

Then, this example is a piece of supervised labeled data. The LSTM language model can directly build a language model on corpus after word segmentation, or directly use word vectors to build a language model without word segmentation.

The conditional random field method can use corpus after word segmentation to build a language model.

In this embodiment, the entity information is identified by the language model, which can improve accuracy of the entity information and can further quickly identify the entity information.

It should be noted that the present application is not limited to identifying entity information by language models, and other methods may also be used to identify entity information, such as identifying entity information of a query text by semantic recognition technology.

Optionally, the time information includes at least one of time point information and time period information. The time point information is analyzed from time description information. The time period information is analyzed from the time description information according to the time point information. The time description information is time description information extracted from the query text.

The foregoing analyzing time point information may including: analyzing according to a preset time granularity. The time granularity information may be as shown in Table 1:

**Table 1**

| | |
|---|---|
| time granularity | example |
| hour | X month x day x hour; x o'clock (hour) in the morning of x month x day |
| half a day | yesterday morning/the day before yesterday afternoon/tonight |
| half a day | x year x month x day (date) morning; |
| | x month x day (date) night |
| day | yesterday/the day before yesterday/today/tomorrow |
| day | x year x month x day (date); x month x day (date) |
| day | last x days; in the past x days; two days ago |
| half a week | first half week |
| week | last x weeks, in the past x weeks, last week, month x week x |
| half a month | first ten days of month x, middle ten days of a month |
| month | last x years, in the past x months, last month |
| month | X month, x year x month |
| half a year | first half of a year, second half of the year, first half of the year of 18 |
| year | in the year of 2019, in the year of 19, this year, last year |

The foregoing time period information may be obtained in a way of determining a time point according to the foregoing time point information, and then determining specific time period information according to key words (such as to, until) of the time description information. The foregoing time period information may be analyzed according to a single time point, two time points of same type, or two time points of different types, etc., for example, as shown in the following Table 2.

**Table 2**

| type | |
|---|---|
| single time point | x month x day, last x days, last month |
| two time points of same type | May 2018 to January 2019 |
| two time points of different types | from late April to July, from the morning before yesterday to yesterday |

The foregoing time description information may be time-related information extracted from the foregoing query text. For example, the time-related information may be extracted through a language model or a semantic analysis method, which is not limited.

In this embodiment, since at least one of the time point information and the time period information can be analyzed, the accuracy of the time information can be improved, thereby improving the accuracy of the query result.

Optionally, the time point information is obtained in the following manner:
normalizing the time description information to obtain time normalization information;
querying a time analysis rule matching the time normalization information;
in case that there are multiple time analysis rules matching the time normalization information, using a preset conflict resolution strategy to select a target time analysis rule to analyze the time normalization information to obtain the time point information; in case that there is only one time analysis rule matching the time normalization information, using the time analysis rule to analyze the time normalization information to obtain the time point information.

The normalizing the time description information to obtain time normalization information, may include: normalizing time information into time information of a same type; for example, normalizing time information in the capital form of a Chinese numeral into digital time information.

In this embodiment, multiple time analysis rules may be pre-configured, for example, time analysis rules of different time granularities. Of course, multiple time analysis rules may also be configured with the same time granularity, which is not limited. In addition, types of time point information analyzed with different time analysis rules may be different. For example, year, month, day and hour may be analyzed out according to one time analysis rule, while month, day and hour may be analyzed out according to another time analysis rule.

The querying a time analysis rule matching the time normalization information, may include: querying a time analysis rule capable of analyzing the foregoing time normalization information, from multiple pre-configured time analysis rules.

In case that there are multiple time analysis rules matching the time normalization information, the using a preset conflict resolution strategy to select a target time analysis rule to analyze the time normalization information, may include: selecting a time analysis rule with a smallest analysis time granularity, from the multiple time analysis rules, as the target time analysis rule. Of course, the present application is not limited thereto. For example, a time analysis rule with a second smallest analysis time granularity may be selected as the target time analysis rule. Specifically, the foregoing conflict resolution strategy may be pre-configured.

In this embodiment, by using the conflict resolution strategy to select the target time analysis rule to analyze the time normalization information, the problem of inaccurate time information caused by time information conflict can be solved.

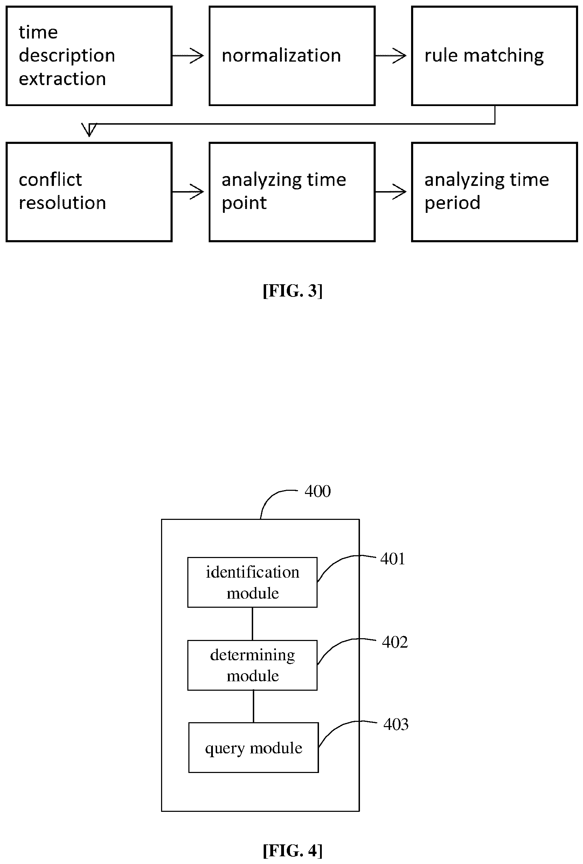

For example, as shown in FIG. 3, the time point information and the time period information may be used to obtain accurate time information through processes of time description extraction, normalization, rule matching, conflict resolution, analyzing time point and analyzing time period.

Further, in this embodiment, since the time description information is normalized, the accuracy of analyzing time information can be improved.

As an optional embodiment, the foregoing intention information includes multi-level intention information. The query interface is a query interface for querying a target intention indicated by target intention information. The target intention information is first-level intention information in the multi-level intention information.

The querying a query result matching the feature information in information corresponding to the intention through the query interface, may include:
through the query interface, querying the query result matching the feature information in target type information corresponding to the target intention; where an information type of the target type information matches intention represented by other intention information, the target type information is information corresponding to the target intention, and the other intention information is intention information other than the target intention information in the multi-level intention information.

The foregoing multi-level intention information indicates intention of identifying a query text and specific conditions. In addition, the foregoing multi-level intention information may include three-level intention information, which includes, for example:
first-level intention type: people, object, records, etc.;
second-level intention type: social background, association relationship, etc.;
three-level intention type: travel, accommodation, etc.

The foregoing target intention information may be three-level intention information, such as travel, accommodation, weather and other intentions.

Further, different levels of intention information may be identified in the same or different ways. For example, the first-level intention information may be identified by a language model, such as the svm/lstm language model, and the second-level or/third-level intention information may be identified by keyword regular matching. Of course, the present application is not limited thereto.

Taking the foregoing target intention information as travel, and other intention information including people and social background as an example, in this way, information, of which the information type is people and which is related to social background, can be queried in information corresponding to the travel.

In this embodiment, the query interface may be an internal interface. The internal interface may be defined in some rule files, such as drools or other rule files.

In case that the type of the foregoing target intention information (for example, three-level intention information) satisfies a certain condition, the corresponding internal interface is triggered, and then an automatic call is completed to query the corresponding query result.

In this embodiment, due to the multi-level intention information, it is only needed to query corresponding type information during query, thereby further improving the efficiency of text query.

A "travel" type query rule is defined in the following. In case that a query text satisfies that a first type intention is people and a third type intention is to travel, then a specified internal api is executed. A query element includes results of entity identification and time analysis. In this way, an interface corresponding to the travel intention is called; through the interface, a query result, of which a type matches people and which matches the feature information, is searched in information corresponding to the travel.

In addition, in case that multiple query interfaces are triggered and executed at the same time, priorities may be specified by setting attributes (for example, salience attribute).

In the present application, through the foregoing method, the query result matching the feature information can be directly searched through a query result corresponding to the intention, thereby improving an efficiency of text query.

Referring to FIG. 4, FIG. 4 is a structural diagram of a text query apparatus provided in the present application. As shown in FIG. 4, a text query apparatus 400 includes:
an identification module 401 configured to identify intention information and feature information of a query text, where the intention information is used to indicate intention of the query text;
a determining module 402 configured to determine a query interface for querying the intention according to the intention information;
a query module 403 configured to query a query result matching the feature information in information corresponding to the intention through the query interface.

Optionally, the feature information includes at least one of the following:
entity information and time information.

Optionally, the entity information is entity information of the query text identified through a language model; and/or,
the time information includes at least one of time point information and time period information. The time point information is analyzed from time description information. The time period information is analyzed from the time description information according to the time point information. The time description information is time description information extracted from the query text.

Optionally, the time point information is obtained in the following manner:
normalizing the time description information to obtain time normalization information;
querying a time analysis rule matching the time normalization information;
in case that there are multiple time analysis rules matching the time normalization information, using a preset conflict resolution strategy to select a target time analysis rule to analyze the time normalization information to obtain the time point information; in case that there is only one time analysis rule matching the time normalization information, using the time analysis rule to analyze the time normalization information to obtain the time point information.

Optionally, the intention information includes multi-level intention information. The query interface is a query interface for querying a target intention indicated by target intention information. The target intention information is first-level intention information in the multi-level intention information.

The query module 403 is configured to, through the query interface, query the query result matching the feature information in target type information corresponding to the target intention; where an information type of the target type information matches intention represented by other intention information, the target type information is information corresponding to the target intention, and the other intention information is intention information other than the target intention information in the multi-level intention information.

The apparatus provided in this embodiment can implement each process implemented in the method embodiment of the present application, and can achieve the same beneficial effects. To avoid repetition, details are not repeated here.

According to the embodiments of the present application, the present application further provides an electronic device and a readable storage medium.

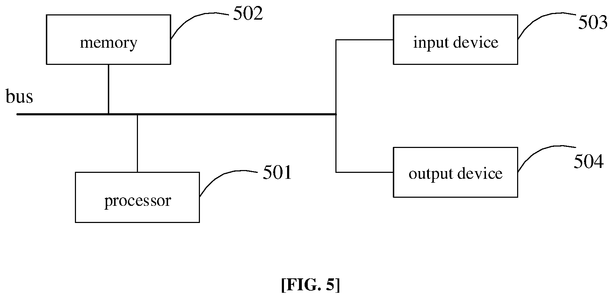

FIG. 5 is a block diagram of an electronic device of a text query method according to an embodiment of the present application. The electronic device is intended to represent various forms of digital computers, such as laptop computers, desktop computers, workstations, personal digital assistants, servers, blade servers, mainframe computers, and other suitable computers. The electronic device may also represent various forms of mobile devices, such as personal digital processing, cellular telephones, smart phones, wearable devices, and other similar computing devices. The components shown herein, their connections and relationships, and their functions are by way of example only and are not intended to limit the implementations of the present application described and/or claimed herein.

As shown in FIG. 5, the electronic device includes: one or more processors 501, a memory 502, and interfaces for connecting various components, including highspeed interfaces and low-speed interfaces. The various components are interconnected using different buses and may be mounted on a common motherboard or otherwise as desired. The processor may process instructions for execution within the electronic device, including instructions stored in the memory or on the memory to display graphical information of a Graphical User Interface (GUI) on an external input/output device, such as a display device coupled to the interface. In other embodiments, multiple processors and/or multiple buses and multiple memories may be used with multiple memories if desired. Similarly, multiple electronic devices may be connected, each providing part of the necessary operations (e.g., as an array of servers, a set of blade servers, or a multiprocessor system). In FIG. 5, one processor 501 is taken as an example.

The memory 502 is a non-transitory computer-readable storage medium provided herein. The memory stores instructions executable by at least one processor to enable the at least one processor to implement the text query method provided herein. The non-transitory computer-readable storage medium of the present application stores computer instructions for enabling a computer to implement the text query method provided herein.

The memory 502, as a non-transitory computer-readable storage medium, may be used to store non-transitory software programs, non-transitory computer-executable programs, and modules, such as program instructions/modules (e.g., the identification module 401, the determining module 402 and the query module 403 shown in FIG. 5) corresponding to the text query method of embodiments of the present application. The processor 501 executes various functional applications of the server and data processing, i.e., a text query method in the above-mentioned method embodiment, by operating non-transitory software programs, instructions, and modules stored in the memory 502.

The memory 502 may include a program storage area and a data storage area, wherein the program storage area may store an application program required by an operating system and at least one function; the data storage area may store data created according to the use of the electronic device of the text query method, etc. In addition, the memory 502 may include a high speed random access memory, and may also include a non-transitory memory, such as at least one magnetic disk storage device, a flash memory device, or other non-transitory solid state memory device. In some embodiments, the memory 502 may optionally include memories remotely located with respect to processor 501, which may be connected via a network to the electronic device of the text query method. Examples of such networks include, but are not limited to, the Internet, intranet, local area networks, mobile communication networks, and combinations thereof.

The electronic device of the text query method may further include: an input device 503 and an output device 504. The processor 501, the memory 502, the input device 503, and the output device 504 may be connected via a bus or otherwise. FIG. 5 takes a bus connection as an example.

The input device 503 may receive input numeric or character information and generate key signal inputs related to user settings and functional controls of the electronic device of the text query method, such as input devices including touch screens, keypads, mice, track pads, touch pads, pointing sticks, one or more mouse buttons, trackballs, joysticks, etc. The output device 504 may include display devices, auxiliary lighting devices (e.g., LEDs), tactile feedback devices (e.g., vibration motors), and the like. The display device may include, but is not limited to, a Liquid Crystal Display (LCD), a Light Emitting Diode (LED) display, and a plasma display. In some embodiments, the display device may be a touch screen.

Various embodiments of the systems and techniques described herein may be implemented in digital electronic circuit systems, integrated circuit systems, Application Specific Integrated Circuits (ASICs), computer hardware, firmware, software, and/or combinations thereof. These various embodiments may include: implementation in one or more computer programs which can be executed and/or interpreted on a programmable system including at least one programmable processor, and the programmable processor may be a dedicated or general-purpose programmable processor which can receive data and instructions from, and transmit data and instructions to, a memory system, at least one input device, and at least one output device.

These computing programs (also referred to as programs, software, software applications, or codes) include machine instructions of a programmable processor, and may be implemented using high-level procedural and/or object-oriented programming languages, and/or assembly/machine languages. As used herein, the terms "machine-readable medium" and "computer-readable medium" refer to any computer program product, device, and/or apparatus (e.g., magnetic disk, optical disk, memory, programmable logic device (PLD)) for providing machine instructions and/or data to a programmable processor, including a machine-readable medium that receives machine instructions as machine-readable signals. The term "machine-readable signal" refers to any signal used to provide machine instructions and/or data to a programmable processor.

To provide for interaction with a user, the systems and techniques described herein may be implemented on a computer having: a display device (e.g., a Cathode Ray Tube (CRT) or Liquid Crystal Display (LCD) monitor) for displaying information to a user; and a keyboard and a pointing device (e.g., a mouse or a trackball) by which a user can provide input to the computer. Other types of devices may also be used to provide interaction with a user; for example, the feedback provided to the user may be any form of sensory feedback (e.g., visual feedback, audile feedback, or tactile feedback); and input from the user may be received in any form, including acoustic input, audio input, or tactile input.

The systems and techniques described herein may be implemented in a computing system that includes a background component (e.g., as a data server), or a computing system that includes a middleware component (e.g., an application server), or a computing system that includes a front-end component (e.g., a user computer having a graphical user interface or a web browser through which a user may interact with embodiments of the systems and techniques described herein), or in a computing system that includes any combination of such background component, middleware component, or front-end component. The components of the system may be interconnected by digital data communication (e.g., a communication network) of any form or medium. Examples of the communication network include: Local Area Networks (LANs), Wide Area Networks (WANs), and the Internet.

The computer system may include a client and a server. The client and the server are typically remote from each other and typically interact through a communication network. A relationship between the client and the server is generated by computer programs operating on respective computers and having a client-server relationship with each other.

According to the technical solution of the embodiment of the application, the query result matching the feature information can be directly searched through a query result corresponding to the intention, thereby improving an efficiency of text query.

It will be appreciated that the various forms of flow, reordering, adding or removing steps shown above may be used. For example, the steps recited in the present application may be performed in parallel or sequentially or may be performed in a different order, so long as the desired results of the technical solutions disclosed in the present application can be achieved, and no limitation is made herein.

The above-mentioned embodiments are not to be construed as limiting the scope of the present application. It will be apparent to a person skilled in the art that various modifications, combinations, sub-combinations and substitutions are possible, depending on design requirements and other factors. Any modifications, equivalents, and improvements within the spirit and principles of this application are intended to be included within the scope of the present application.

## Claims

1. A text query method, comprising:
identifying (S101) intention information and feature information of a query text, wherein the intention information is used to indicate intention of the query text;
according to the intention information, determining (S102) a query interface for querying the intention; and
querying (S103) a query result matching the feature information in information corresponding to the intention through the query interface.

2. The method according to claim 1, wherein the feature information comprises at least one of the following: entity information and time information.

3. The method according to claim 2, wherein the entity information is entity information of the query text identified through a language model; and/or,
the time information comprises at least one of time point information and time period information; the time point information is analyzed from time description information; the time period information is analyzed from the time description information according to the time point information; and the time description information is time description information extracted from the query text.

4. The method according to claim 3, wherein the time point information is obtained in the following manner:
normalizing the time description information to obtain time normalization information;
querying a time analysis rule matching the time normalization information;
in case that there are multiple time analysis rules matching the time normalization information, using a preset conflict resolution strategy to select a target time analysis rule to analyze the time normalization information to obtain the time point information; in case that there is only one time analysis rule matching the time normalization information, using the time analysis rule to analyze the time normalization information to obtain the time point information.

5. The method according to any one of claims 1 to 4, wherein the intention information comprises multi-level intention information; the query interface is a query interface for querying a target intention indicated by target intention information; the target intention information is first-level intention information in the multi-level intention information;
wherein the querying a query result matching the feature information in information corresponding to the intention through the query interface, comprises:
through the query interface, querying the query result matching the feature information in target type information corresponding to the target intention; wherein an information type of the target type information matches intention represented by other intention information, the target type information is information corresponding to the target intention, and the other intention information is intention information other than the target intention information in the multi-level intention information.

6. A text query apparatus (400), comprising:
an identification module (401) configured to identify intention information and feature information of a query text, wherein the intention information is used to indicate intention of the query text;
a determining module (402) configured to determine a query interface for querying the intention according to the intention information; and
a query module (403) configured to query a query result matching the feature information in information corresponding to the intention through the query interface.

7. The apparatus (400) according to claim 6, wherein the feature information comprises at least one of the following: entity information and time information.

8. The apparatus (400) according to claim 7, wherein the entity information is entity information of the query text identified through a language model; and/or,
the time information comprises at least one of time point information and time period information; the time point information is analyzed from time description information; the time period information is analyzed from the time description information according to the time point information; and the time description information is time description information extracted from the query text.

9. The apparatus (400) according to claim 8, wherein the time point information is obtained in the following manner:
normalizing the time description information to obtain time normalization information;
querying a time analysis rule matching the time normalization information;
in case that there are multiple time analysis rules matching the time normalization information, using a preset conflict resolution strategy to select a target time analysis rule to analyze the time normalization information to obtain the time point information; in case that there is only one time analysis rule matching the time normalization information, using the time analysis rule to analyze the time normalization information to obtain the time point information.

10. The apparatus (400) according to any one of claims 6 to 9, wherein the intention information comprises multi-level intention information; the query interface is a query interface for querying a target intention indicated by target intention information; the target intention information is first-level intention information in the multi-level intention information;
wherein the query module is configured to, through the query interface, query the query result matching the feature information in target type information corresponding to the target intention; wherein an information type of the target type information matches intention represented by other intention information, the target type information is information corresponding to the target intention, and the other intention information is intention information other than the target intention information in the multi-level intention information.

11. An electronic device, comprising:
at least one processor (501); and
a memory (502) communicatively connected to the at least one processor (501); wherein,
the memory (502) stores instructions executable by the at least one processor (501) to enable the at least one processor (501) to implement the method of any one of claims 1 to 5.

12. A non-transitory computer-readable storage medium storing computer instructions for causing the computer to perform the method of any one of claims 1 to 5.

13. A computer program product, comprising a computer program that, when executed by a computer, causes the computer to implement the method according to any one of claims 1 to 5.
